# FASCICULE DE BREVET EUROPEEN

(11) **EP 2 630 688 B1**
(45) Date de publication et mention de la délivrance du brevet: **28.01.2015**
(21) Numéro de dépôt: 11770453.6
(22) Date de dépôt: 17.10.2011
(51) Int. Cl.: H01M 2/10, B60R 16/033, H01M 10/42, H01M 10/48, H01M 10/613, H01M 10/615, H01M 10/617, H01M 10/625, H01M 10/6565, H01M 10/658, H01M 10/637, H01M 10/6571

(54) **BATTERIE D'UNE MOTORISATION ÉLECTRIQUE DE VÉHICULE AUTOMOBILE**
BATTERIE FÜR EINEN ELEKTROMOTOR EINES KRAFTFAHRZEUGS
BATTERY FOR AN ELECTRIC MOTOR OF A MOTOR VEHICLE

(30) Priorité: 19.10.2010 FR 1058534
(43) Date de publication de la demande: 28.08.2013
(73) Titulaire: Commissariat à l'Énergie Atomique et aux Énergies Alternatives, 75015 Paris (FR)
(72) Inventeur: DESBOIS-RENAUDIN, Matthieu, F-38250 Villard De Lans (FR); CHATROUX, Daniel, F-38470 Teche (FR); FERNANDEZ, Eric, F-38760 Saint Paul De Varces (FR)
(74) Mandataire: Guérin, Jean-Philippe
(86) Numéro de dépôt international: PCT/EP2011/068138
(87) Numéro de publication internationale: WO 2012/052417

(56) Documents cités:
- EP-A1- 2 133 952
- WO-A1-2009/119037
- JP-A- 2010 167 799
- US-A- 4 517 263
- US-A1- 2005 242 782

## Description

L'invention concerne les véhicules automobiles, et en particulier les véhicules automobiles motorisés par un moteur électrique.

La lutte contre la pollution atmosphérique a conduit les constructeurs automobiles à développer des véhicules à plus faible consommation de carburant, voire des véhicules dépourvus de moteurs à combustion interne.

Ainsi, un nombre croissant de prototypes et de véhicules de série comportent un moteur électrique, soit comme unique moyen d'entraînement, soit en association avec un moteur à combustion interne.

De tels véhicules nécessitent des batteries d'accumulateurs électrochimiques pour réaliser le stockage d'une importante quantité d'énergie en vue d'alimenter le moteur électrique. Un accumulateur électrochimique a habituellement une tension nominale de l'ordre de grandeur suivant:
1.2 V pour des batteries de type NiMH,
3.3 V pour une technologie Lithium ion phosphate de fer, LiFePO4,
4.2 V pour une technologie de type Lithium ion à base d'oxyde de cobalt.

Ces tensions nominales sont trop faibles par rapport aux exigences du moteur à alimenter. Pour obtenir le niveau de tension adéquat, on place en série plusieurs accumulateurs électrochimiques. Pour obtenir de fortes puissances et capacités, on place plusieurs groupes d'accumulateurs en série. Le nombre d'étages (nombre de groupes d'accumulateurs) et le nombre d'accumulateurs en parallèle dans chaque étage varient en fonction de la tension, du courant et de la capacité souhaités pour la batterie.

La nécessité d'un grand nombre d'accumulateurs électrochimiques induit un surcoût non négligeable pour le véhicule. De plus, de tels accumulateurs électrochimiques présentent une durée de vie limitée qui implique généralement leur remplacement au moins une fois durant la durée de vie du véhicule. Ce remplacement ayant un coût très élevé pour l'utilisateur, il est souhaitable d'optimiser au maximum la durée de vie des accumulateurs électrochimiques.

Les conditions de fonctionnement et d'utilisation de la batterie ont une incidence non négligeable sur cette durée de vie. Les accumulateurs électrochimiques ont généralement une plage de fonctionnement en température restreinte entre 0°C et 60°C. Un fonctionnement en dehors de cette plage de température peut amener à détériorer les accumulateurs ou induire leur destruction par emballement thermique. La température optimale de fonctionnement est approximativement de 30°C. Plus on se rapproche des bornes de la plage de fonctionnement, plus on altère la durée de vie des accumulateurs. Par conséquent, on considère généralement que la température de fonctionnement optimale des accumulateurs garantissant leur durée de vie est comprise entre 10 °C et 45 °C.

Le maintien d'une batterie dans cette gamme de température peut s'avérer difficile, les véhicules automobiles étant supposés fonctionner de façon satisfaisante dans une plage de température allant de -30°C à + 45°C. À cet effet, un certain nombre de batteries présentant des circuits d'écoulement d'un liquide de régulation de leur température ont été développées. De telles batteries s'avèrent cependant plus lourdes et plus complexes, du fait de la présence du liquide de refroidissement et de l'obligation d'assurer une étanchéité entre ce liquide de refroidissement et la connectique électrique des accumulateurs. La masse des batteries constitue alors une part non négligeable de la masse du véhicule et peut détériorer ses performances et son comportement dynamique.

Les batteries de véhicules automobiles induisent également un certain nombre de contraintes de conception supplémentaires. Les batteries automobiles doivent notamment présenter une étanchéité à l'eau afin d'éviter des courts-circuits lorsqu'elles sont soumises à des intempéries, voire lors d'une immersion du véhicule. De plus, les batteries doivent présenter une étanchéité au gaz. L'étanchéité au gaz permet d'une part d'éviter l'entrée de vapeur d'eau dans la batterie, puis la condensation de cette vapeur lors d'un changement d'altitude ou de température. L'eau condensée pourrait alors induire des courts-circuits. De plus, l'étanchéité au gaz permet d'éviter des émanations toxiques à l'extérieur lors de la dégradation accidentelle d'un accumulateur.

Des batteries à régulation thermique par circulation d'air ont également été développées. Cependant, de telles batteries ne permettent pas de respecter les conditions d'étanchéité à l'eau et au gaz mentionnées précédemment. La batterie présente notamment des risques de condensation lorsque l'air est prélevé à l'extérieur du véhicule ou des risques de sécurité des passagers lorsque l'air est prélevé à l'intérieur du véhicule.

Ainsi, aucune solution connue ne permet à ce jour de garantir un fonctionnement de la batterie dans sa plage de fonctionnement optimale avec un poids réduit et des conditions de sécurité satisfaisantes.

Le document EP2133952 décrit une batterie munie d'accumulateurs électrochimiques. Les accumulateurs sont disposés dans un boîtier adiabatique dans un cas particulier. Ce boîtier inclut une séparation interne entre un écoulement liquide et un écoulement d'air.

Une telle batterie ne permet pas de contrôler dynamiquement les échanges thermiques de la batterie avec l'extérieur avec une bonne sécurité de fonctionnement.

Le document JP 2010 167799 décrit une batterie munie d'accumulateurs électrochimiques, inclus dans une enceinte adiabatique. Des vannes permettent sélectivement de réaliser un échange de chaleur entre l'intérieur de l'enceinte adiabatique et un échangeur.

L'invention vise à résoudre un ou plusieurs de ces inconvénients. L'invention porte ainsi sur une batterie d'alimentation d'une motorisation électrique de véhicule automobile, la batterie comprenant des accumulateurs électrochimiques et étant caractérisée en ce que les éléments électrochimiques sont inclus dans une enceinte adiabatique et sont inclus dans une enceinte étanche à l'air et à l'eau.

L'enceinte étanche englobe l'enceinte adiabatique et présente un volume extérieur à l'enceinte adiabatique et bénéficiant d'échanges thermiques avec l'extérieur, la batterie comportant une vanne établissant sélectivement un écoulement d'un fluide caloporteur entre l'enceinte adiabatique et ledit volume.

L'enceinte étanche est configurée pour se déformer élastiquement lors d'une variation de pression à l'intérieur de celle-ci.

Selon encore une autre variante, l'enceinte étanche présente au moins une face déformable présentant une section ondulée.

Selon une variante, ladite face déformable est réalisée dans un matériau thermiquement conducteur.

Selon une autre variante, l'enceinte étanche établit sélectivement un écoulement de gaz avec l'enceinte adiabatique et comporte un échangeur air/air avec l'extérieur.

Selon encore une variante, la batterie comprend un circuit de circulation d'air entre les accumulateurs électrochimiques et comporte un dispositif de génération d'un écoulement d'air dans ledit circuit.

Selon encore une autre variante, l'enceinte adiabatique présente une résistivité thermique avec l'extérieur supérieure à 0,1 m².K/W.

Selon une variante, l'enceinte adiabatique est remplie d'un gaz inerte.

L'invention porte également sur un véhicule automobile, comprenant :
- un moteur électrique ;
- une batterie telle que définie ci-dessus alimentant le moteur électrique, la constante de temps thermique de la batterie étant au moins deux fois supérieure à l'autonomie du véhicule entraîné par le moteur électrique.

Selon une variante, le véhicule comprend:
- une sonde de mesure de la température à l'intérieur de l'enceinte adiabatique ;
- une sonde de mesure de la température à l'extérieur de la batterie ;
- un module de commande établissant l'écoulement de fluide caloporteur entre ledit volume extérieur et l'enceinte adiabatique lorsque :
- la température extérieure est supérieure à la température dans l'enceinte adiabatique et la température dans l'enceinte adiabatique est inférieure à un seuil bas ; ou
- la température extérieure est inférieure à la température dans l'enceinte adiabatique et la température dans l'enceinte adiabatique est supérieure à un seuil haut.

Selon une variante, le module de commande est apte à déterminer l'absence d'alimentation du moteur par la batterie, le module de commande conditionnant l'établissement de l'écoulement de fluide caloporteur à la détermination de l'absence d'alimentation du moteur par la batterie.

Selon encore une variante, la batterie comprend un circuit d'équilibrage des charges des accumulateurs logé dans l'enceinte adiabatique et muni d'au moins une résistance de décharge, le module de commande étant apte à commander une décharge des accumulateurs dans ladite résistance de décharge lorsque la température à l'intérieur de l'enceinte adiabatique est inférieure au seuil bas et qu'une absence d'alimentation du moteur a été déterminée.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique en coupe d'une première variante de batterie selon l'invention ;
- les figures 2 et 3 sont des représentations schématiques en coupe d'une deuxième variante de batterie selon l'invention ;
- la figure 4 est une représentation schématique de l'implantation d'une batterie selon l'invention dans un véhicule automobile.

L'invention propose de réduire au maximum les échanges thermiques entre l'extérieur et les accumulateurs électrochimiques d'une batterie d'alimentation d'une motorisation de véhicule automobile, en incluant en outre ces éléments électrochimiques dans une enceinte étanche à l'air et à l'eau.

L'enceinte étanche englobe l'enceinte adiabatique et présente un volume extérieur à l'enceinte adiabatique et bénéficiant d'échanges thermiques avec l'extérieur, la batterie comportant une vanne établissant sélectivement un écoulement d'un fluide caloporteur entre l'enceinte adiabatique et ledit volume.

L'invention permet de garantir à la fois l'absence de courts-circuits de la batterie par projection, immersion ou condensation, et de garantir que les accumulateurs électrochimiques pourront être maintenus dans leur plage de fonctionnement optimale même lorsque les températures environnantes sont extrêmes.

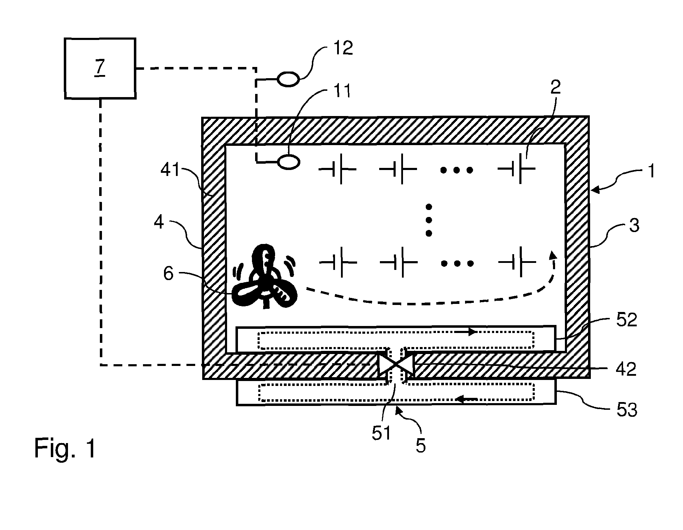

La figure 1 est une représentation schématique en coupe d'une première variante de batterie 1 selon l'invention. La batterie 1 comprend une paroi 41 délimitant l'enceinte adiabatique 4. Des cellules ou accumulateurs électrochimiques 2 sont inclus à l'intérieur de la paroi 41.

Les accumulateurs électrochimiques 2 peuvent être connectés de façon connue en soi pour former plusieurs étages en série, chaque étage comprenant plusieurs accumulateurs en parallèle. La batterie 1 comprend deux bornes de connexion électrique non représentées à l'extérieur de la paroi 41, permettant aux accumulateurs électrochimiques 2 d'alimenter une charge électrique.

On considérera que l'enceinte 4 est adiabatique si elle présente une résistivité thermique supérieure à 0,1 m²·K/W. L'enceinte 4 présentera de préférence une résistivité thermique supérieure à 0,2 m²·K/W. L'enceinte 4 permet ainsi de réduire quasiment à néant les échanges thermiques avec l'environnement extérieur lorsque les conditions de température rencontrées sont incompatibles avec la température optimale de fonctionnement des accumulateurs 2. Cette conception va à l'encontre d'un préjugé technique courant selon lequel la chaleur générée à l'intérieur de la batterie par effet Joule doit être évacuée hors de la batterie en maximisant les échanges thermiques de celle-ci avec l'extérieur durant son fonctionnement. On pourra former une enceinte adiabatique 4 par tous moyens appropriés connus en soi. On pourra également revêtir l'intérieur de l'enceinte 4 d'une surface réfléchissante afin de réduire les échanges énergétiques avec l'extérieur par rayonnement.

La combinaison de la paroi 41 et d'un échangeur 53 forment une enceinte 3, étanche au gaz et à l'eau. Les matériaux et la structure de la paroi 41 pourront également être sélectionnés de façon connue en soi pour garantir une étanchéité au gaz et à l'eau à l'intérieur de l'enceinte étanche 3. L'enceinte étanche 3 formée pourra par exemple être conçue pour respecter la norme IP65 contre les projections d'eau ou la norme IP68 contre l'immersion prolongée. L'étanchéité à l'eau permet d'éviter des courts-circuits par introduction d'eau à l'intérieur de la batterie 1. L'étanchéité aux gaz permet d'une part d'éviter l'entrée d'humidité dans la batterie 1 (risquant de générer un court-circuit lors d'une condensation), et d'autre part d'éviter une émission de gaz toxique vers les usagers en cas de destruction d'un accumulateur 2.

La batterie 1 comprend avantageusement un circuit de circulation de gaz entre les accumulateurs 2, ainsi qu'un dispositif de ventilation 6 permettant de générer un écoulement de gaz dans ce circuit. Un tel circuit d'écoulement de gaz permet d'homogénéiser la température des différents accumulateurs 2 et ainsi d'éviter des dispersions trop importantes entre les durées de vie des différents accumulateurs 2. Des différences de température répétées sur de nombreux cycles de fonctionnement de la batterie 1 pourraient en effet induire des vieillissements très différents des accumulateurs 2 et obliger à changer la batterie malgré la présence de nombreux accumulateurs encore opérationnels. Un tel dispositif de ventilation 6 s'avèrera particulièrement avantageux lorsque le courant fourni par la batterie 1 à un moteur électrique sera élevé. Il est possible de remplir l'intérieur de l'enceinte adiabatique 4 avec un gaz neutre (type argonite ou CO₂) afin d'éviter un apport d'oxygène en cas d'incident. Le gaz de remplissage de l'enceinte adiabatique 4 pourra aussi être avantageusement choisi de façon à maximiser les échanges thermiques à l'intérieur de l'enceinte 4, à limiter les fuites, voire à augmenter l'inertie thermique du contenu de l'enceinte 4.

Une sonde de température 11 est logée à l'intérieur de la paroi 41. La sonde de température 11 est connectée à un module électronique de contrôle et de commande 7. Le module 7 est connecté à une sonde de température 12 mesurant la température de l'environnement extérieur.

Un orifice 51 est ménagé dans la paroi 41. L'orifice 51 est obturé par une vanne 42. La vanne 42 peut être sélectivement fermée ou ouverte par l'intermédiaire du module de commande 7. La batterie 1 comprend en outre un échangeur de chaleur 5. L'échangeur de chaleur 5 comprend un échangeur air/air 52 logé à l'intérieur de l'enceinte adiabatique 4. L'échangeur de chaleur 5 comprend de plus un échangeur air/air 53 logé à l'extérieur de l'enceinte adiabatique 4. Le volume interne de cet échangeur 53 réalise ainsi des échanges thermiques avec l'extérieur. La combinaison de la paroi 41 et de l'échangeur 53 forment l'enceinte 3 étanche au gaz et à l'eau. L'enceinte étanche 3 englobe ainsi l'enceinte adiabatique 4.

Lorsque la vanne 42 est ouverte, un écoulement d'air peut être entretenu à l'intérieur des échangeurs 52 et 53 et entre ces échangeurs 52 et 53. Ainsi, lorsque la vanne 42 est ouverte, on peut assurer un échange thermique entre l'intérieur de l'enceinte 4 et l'extérieur. Au contraire, lorsque la vanne 42 est fermée, les accumulateurs 2 sont maintenus isolés thermiquement de l'extérieur.

Une telle variante permet de modifier la température à l'intérieur de la batterie 1 de préférence en dehors des périodes d'alimentation du moteur électrique, en bénéficiant des conditions de température extérieures. Le module 7 pourra commander l'ouverture ou la fermeture de la vanne 42 en fonction des températures respectives mesurées par la sonde 11 et la sonde 12.

Par exemple, lorsque la batterie 1 n'alimente pas de moteur électrique, si la température dans l'enceinte 4 mesurée par la sonde 11 est supérieure à un seuil haut (par exemple du fait d'un fonctionnement prolongé associé à une présence prolongée du véhicule à très haute température) et que la température extérieure mesurée par la sonde 12 est inférieure à la mesure de la sonde 11 (par exemple avec une température relativement basse une nuit d'été), alors la vanne 42 sera ouverte pour générer un échange thermique entre l'extérieur et l'intérieur de l'enceinte 4. Ainsi, lors de la prochaine utilisation de la batterie 1, on aura pu préalablement réduire sa température avec une consommation électrique réduite. La durée de vie de la batterie 1 pourra ainsi être accrue par un contrôle réalisé en dehors de ses périodes de fonctionnement.

Selon un autre exemple, lorsque la batterie 1 n'alimente pas de moteur électrique, si la température dans l'enceinte 4 mesurée par la sonde 11 est inférieure à un seuil bas (par exemple du fait d'un stationnement prolongé du véhicule à très basse température) et que la température extérieure mesurée par la sonde 12 est supérieure à la mesure de la sonde 11 (par exemple du fait du placement momentané de la voiture dans un garage), alors la vanne 42 sera ouverte pour générer un échange thermique entre l'extérieur et l'intérieur de l'enceinte 4. Ainsi, lors de la prochaine utilisation de la batterie 1, on aura pu préalablement augmenter sa température avec une consommation électrique réduite. Les seuils haut et bas pourront par exemple être fixés à 45° et 10°C. Selon encore un exemple, lorsque le véhicule est à l'arrêt et que la batterie 1 est placé en charge, des pertes par effet Joule pourront être artificiellement générées à l'intérieur de l'enceinte 4 afin d'augmenter sa température. De telles pertes par effet Joule pourront par exemple être générées en déchargeant les accumulateurs ou une source électrique externe dans des résistances d'un circuit d'équilibrage de charge logée à l'intérieur de la batterie 1.

Ainsi, on peut à la fois éviter les problèmes liés à une introduction de gaz ou d'eau tout en permettant de générer un échange thermique avec la batterie 1 seulement dans des conditions appropriées.

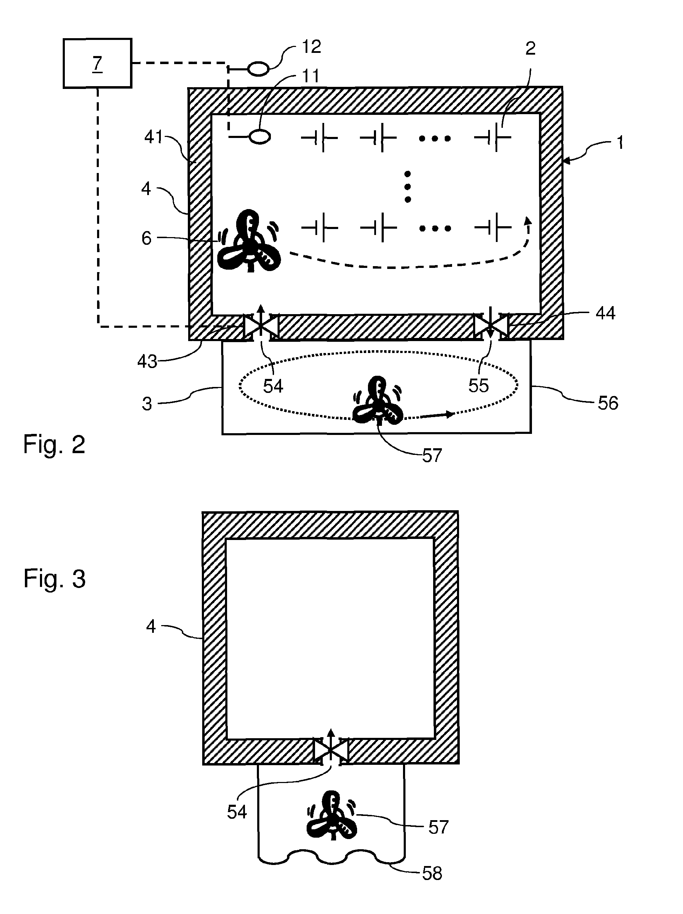

Les figures 2 et 3 sont des vues en coupe schématiques respectivement axiale et transversale d'une batterie 1 selon une deuxième variante. Comme dans l'exemple de la figure 1, cette batterie 1 présente une paroi 41 délimitant l'enceinte adiabatique 4. Des cellules électrochimiques 2 sont incluses à l'intérieur de la paroi 41. Un dispositif de ventilation 6 génère un écoulement d'air dans un circuit d'écoulement d'air ménagé entre les accumulateurs 2.

Des orifices 54 et 55 sont ménagés dans la paroi 41. Les orifices 54 et 55 sont obturés respectivement par des vannes 43 et 44. Les vannes 43, 44 peuvent être sélectivement fermées ou ouvertes par l'intermédiaire du module de commande 7.

La batterie 1 comprend en outre un échangeur air/air 56. L'échangeur de chaleur 56 délimite un volume interne réalisant des échanges thermiques avec l'extérieur. La combinaison de la paroi 41 et de l'échangeur 56 forment l'enceinte 3 étanche au gaz et à l'eau. L'enceinte étanche 3 englobe ainsi l'enceinte adiabatique 4. Un dispositif de ventilation 57 génère un écoulement à l'intérieur de l'échangeur 56, et avec l'intérieur de l'enceinte 4 lorsque les vannes 43 et 44 sont ouvertes.

Lorsque les vannes 43 et 44 sont simultanément ouvertes, un écoulement d'air peut être entretenu entre l'échangeur 56 et l'enceinte adiabatique 4. Ainsi, lorsque les vannes 43 et 44 sont ouvertes, on peut assurer un échange thermique entre l'intérieur de l'enceinte 4 et l'extérieur. Au contraire, lorsque les vannes 43 et 44 sont fermées, les accumulateurs 2 sont maintenus isolés thermiquement de l'extérieur.

Dans cet exemple, l'enceinte étanche 3 est configurée pour se déformer élastiquement lors d'une variation de pression à l'intérieur de celle-ci. Lors d'une ouverture des vannes 43 et 44, l'enceinte étanche 3 permet ainsi de compenser aisément les variations de pression relatives apparues à l'intérieur de l'enceinte adiabatique 4 (dues par exemple à l'échauffement des accumulateurs 2 ou à une variation d'altitude) ou à un dégazage intervenant dans l'enceinte adiabatique lors d'une éventuelle destruction d'un accumulateur 2. De plus, dans ce dernier cas, le dégazage pourra être confiné à l'intérieur de la batterie 1.

La batterie 1 pourra être munie d'un capteur de pression disposé à l'intérieur de l'enceinte 4, afin d'ouvrir les vannes 43 et 44 en cas de surpression à l'intérieur de l'enceinte 4.

Comme illustré à la figure 3, l'échangeur 56 peut comporter une face inférieure déformable 58. Cette face inférieure 58 présente avantageusement une section ondulée, ce qui facilite une déformation de grande amplitude lors de variations de pression. La face inférieure de l'échangeur 56 est avantageusement réalisée dans un matériau thermiquement conducteur tel qu'un métal, afin de favoriser les échanges avec l'extérieur.

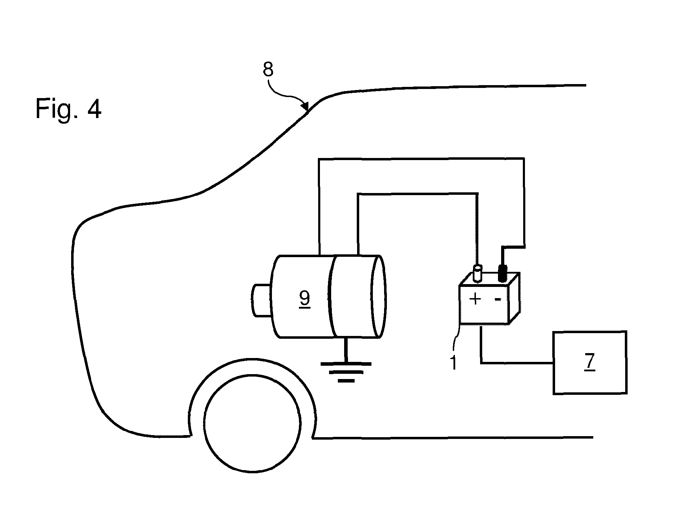

La figure 4 représente schématiquement une batterie 1 selon l'invention associée à différents composants dans un véhicule automobile 8. Le véhicule 8 comprend un moteur électrique 9 alimenté par la batterie 1. Le moteur électrique 9 peut être soit l'unique moteur d'entraînement du véhicule 8, soit être associé à un autre type de moteur dans une motorisation hybride.

Afin que l'utilisation de la batterie 1 n'induise pas une élévation de température trop importante, la batterie 1 est avantageusement dimensionnée de sorte que sa constante de temps thermique (définie comme la durée nécessaire pour que la batterie passe d'une température de 20 °C à sa température maximale d'utilisation : cette constante est proportionnelle à la capacité calorifique de la batterie, à sa masse et à la puissance dissipée en utilisation intensive et inversement proportionnelle à la résistance thermique des parois) soit très supérieure à l'autonomie du véhicule 8 avec le moteur électrique 9, lorsque ce moteur électrique 9 est alimenté uniquement par la décharge de la batterie 1. Cette constante de temps thermique pourra par exemple être au moins deux fois supérieure à cette autonomie, de sorte qu'une utilisation en continu de la batterie 1 ne risque pas d'induire sa détérioration par échauffement.

## Revendications

1. Batterie (1) d'alimentation d'une motorisation électrique de véhicule automobile, la batterie comprenant des accumulateurs électrochimiques (2) inclus dans une enceinte adiabatique (4) et inclus dans une enceinte étanche à l'air et à l'eau (3), batterie dans laquelle l'enceinte étanche (3) englobe l'enceinte adiabatique (4) et présente un volume extérieur à l'enceinte adiabatique et bénéficiant d'échanges thermiques avec l'extérieur, la batterie comportant une vanne (42) établissant sélectivement un écoulement d'un fluide caloporteur entre l'enceinte adiabatique et ledit volume,
**caractérisée en ce que** l'enceinte étanche (3) est configurée pour se déformer élastiquement lors d'une variation de pression à l'intérieur de celle-ci.

2. Batterie selon la revendication 1, dans laquelle l'enceinte étanche (3) présente au moins une face déformable (58) présentant une section ondulée.

3. Batterie selon la revendication 2, dans laquelle ladite face déformable (58) est réalisée dans un matériau thermiquement conducteur.

4. Batterie selon l'une quelconque des revendications 1 à 3, dans laquelle l'enceinte étanche (3) établit sélectivement un écoulement de gaz avec l'enceinte adiabatique et comporte un échangeur air/air avec l'extérieur.

5. Batterie selon l'une quelconque des revendications précédentes, comportant un circuit de circulation d'air entre les accumulateurs électrochimiques et comportant un dispositif (6) de génération d'un écoulement d'air dans ledit circuit.

6. Batterie selon l'une quelconque des revendications précédentes, dans laquelle l'enceinte adiabatique (4) présente une résistivité thermique avec l'extérieur supérieure à 0,1 m²·K/W.

7. Batterie selon l'une quelconque des revendications précédentes, dans laquelle l'enceinte adiabatique (4) est remplie d'un gaz inerte.

8. Véhicule automobile (8), comprenant :
- un moteur électrique (9) ;
- une batterie selon l'une quelconque des revendications précédentes alimentant le moteur électrique, la constante de temps thermique de la batterie étant au moins deux fois supérieure à l'autonomie du véhicule entraîné par le moteur électrique.

9. Véhicule automobile (8) selon la revendication 8, comprenant :
- une batterie selon l'une quelconque des revendications 1 à 4 ;
- une sonde de mesure (11) de la température à l'intérieur de l'enceinte adiabatique ;
- une sonde de mesure (12) de la température à l'extérieur de la batterie ;
- un module de commande (7) établissant l'écoulement de fluide caloporteur entre ledit volume extérieur et l'enceinte adiabatique lorsque :
- la température extérieure est supérieure à la température dans l'enceinte adiabatique et la température dans l'enceinte adiabatique est inférieure à un seuil bas ; ou
- la température extérieure est inférieure à la température dans l'enceinte adiabatique et la température dans l'enceinte adiabatique est supérieure à un seuil haut.

10. Véhicule automobile selon la revendication 9, dans lequel le module de commande est apte à déterminer l'absence d'alimentation du moteur par la batterie, le module de commande conditionnant l'établissement de l'écoulement de fluide caloporteur à la détermination de l'absence d'alimentation du moteur par la batterie.

11. Véhicule automobile selon la revendication 9 et 10, dans lequel la batterie comprend un circuit d'équilibrage des charges des accumulateurs logé dans l'enceinte adiabatique (4) et muni d'au moins une résistance de décharge, le module de commande étant apte à commander une décharge des accumulateurs dans ladite résistance de décharge lorsque la température à l'intérieur de l'enceinte adiabatique (4) est inférieure au seuil bas et qu'une absence d'alimentation du moteur a été déterminée.

## Patentansprüche

1. Batterie (1) für die Versorgung eines elektrischen Antriebs eines Kraftfahrzeugs, wobei die Batterie elektrochemische Akkumulatoren (2) umfasst, die in einem adiabatischen Gehäuse (4) enthalten sind und in einem gegenüber Luft und Wasser dichten Gehäuse (3) enthalten sind, wobei in der Batterie das dichte Gehäuse (3) das adiabatische Gehäuse (4) beinhaltet und ein Volumen außerhalb des adiabatischen Gehäuses aufweist und den Wärmeaustausch mit der äußeren Umgebung nutzt, wobei die Batterie ein Ventil (42) umfasst, das wahlweise eine Strömung eines Wärmeübertragungsfluids zwischen dem adiabatischen Gehäuse und diesem Volumen herstellt,
**dadurch gekennzeichnet, dass** das dichte Gehäuse (3) konfiguriert ist, sich bei einer Druckänderung in ihm elastisch zu verformen.

2. Batterie nach Anspruch 1, wobei das dichte Gehäuse (3) wenigstens eine verformbare Fläche (58) aufweist, die einen welligen Abschnitt aufweist.

3. Batterie nach Anspruch 2, wobei die verformbare Fläche (58) aus einem wärmeleitenden Material verwirklicht ist.

4. Batterie nach einem der Ansprüche 1 bis 3, wobei das dichte Gehäuse (3) wahlweise eine Gasströmung mit dem adiabatischen Gehäuse herstellt und einen Luft/Luft-Tauscher mit der äußeren Umgebung aufweist.

5. Batterie nach einem der vorhergehenden Ansprüche, die einen Luftzirkulationskreis zwischen den elektrochemischen Akkumulatoren umfasst und eine Vorrichtung (6) für die Erzeugung einer Luftströmung in dem Kreis umfasst.

6. Batterie nach einem der vorhergehenden Ansprüche, wobei das adiabatische Gehäuse (4) einen spezifischen Wärmewiderstand mit der äußeren Umgebung von mehr als 0,1 m²·K/W aufweist.

7. Batterie nach einem der vorhergehenden Ansprüche, wobei das adiabatische Gehäuse (4) mit einem Edelgas gefüllt ist.

8. Kraftfahrzeug (8), das Folgendes umfasst:
- einen Elektromotor (9);
- eine Batterie nach einem der vorhergehenden Ansprüche, die den Elektromotor versorgt, wobei die thermische Zeitkonstante der Batterie wenigstens zweimal größer als die Betriebszeit des von dem Elektromotor angetriebenen Fahrzeugs ist.

9. Kraftfahrzeug (8) nach Anspruch 8, das Folgendes umfasst:
- eine Batterie nach einem der Ansprüche 1 bis 4;
- eine Sonde (11) zum Messen der Temperatur innerhalb des adiabatischen Gehäuses;
- eine Sonde (12) zum Messen der Temperatur außerhalb der Batterie;
- ein Steuermodul (7), das die Strömung eines Wärmeübertragungsfluids zwischen dem äußeren Volumen und dem adiabatischen Gehäuse herstellt, wenn:
- die Außentemperatur höher ist als die Temperatur in dem adiabatischen Gehäuse und die Temperatur in dem adiabatischen Gehäuse niedriger als ein unterer Schwellenwert ist; oder
- die Außentemperatur niedriger als die Temperatur in dem adiabatischen Gehäuse ist und die Temperatur in dem adiabatischen Gehäuse höher als ein oberer Schwellenwert ist.

10. Kraftfahrzeug nach Anspruch 9, wobei das Steuermodul dafür ausgelegt ist, das Fehlen einer Versorgung des Motors durch die Batterie zu bestimmen, wobei das Steuermodul die Herstellung der Strömung des Wärmeübertragungsfluids bei der Bestimmung des Fehlens der Versorgung des Motors durch die Batterie bedingt.

11. Kraftfahrzeug nach Anspruch 9 und 10, wobei die Batterie eine Ladungsausgleichsschaltung der in dem adiabatischen Gehäuse (4) befindlichen Akkumulatoren umfasst und mit wenigstens einem Entladungswiderstand versehen ist, wobei das Steuermodul dafür ausgelegt ist, eine Entladung der Akkumulatoren in dem Entladungswiderstand zu steuern, wenn die Temperatur in dem adiabatischen Gehäuse (4) niedriger als ein unterer Schwellenwert ist und das Fehlen der Versorgung des Motors bestimmt worden ist.

## Claims

1. Battery (1) for powering an electric motor of a motor vehicle, the battery comprising electrochemical accumulators (2) included in an adiabatic enclosure (4) and included in an air-tight and water-tight enclosure (3), in which battery the tight enclosure (3) encompasses the adiabatic enclosure (4) and has a volume external to the adiabatic enclosure and that benefits from heat exchanges with the outside, the battery comprising a valve (42) selectively establishing a flow of a heat transfer fluid between the adiabatic enclosure and said volume,
**characterized in that** the tight enclosure (3) is configured to be elastically deformed upon a variation of pressure inside the latter.

2. Battery according to Claim 1, in which the tight enclosure (3) has at least one deformable face (58) having a corrugated section.

3. Battery according to Claim 2, in which said deformable face (58) is produced from a thermally conductive material.

4. Battery according to any one of Claims 1 to 3, in which the tight enclosure (3) selectively establishes a flow of gas with the adiabatic enclosure and includes an air/air exchanger with the outside.

5. Battery according to any one of the preceding claims, including an air circulation circuit between the electrochemical accumulators and including a device (6) for generating a flow of air in said circuit.

6. Battery according to any one of the preceding claims, in which the adiabatic enclosure (4) has a thermal resistivity with the outside greater than 0.1 m²·K/W.

7. Battery according to any one of the preceding claims, in which the adiabatic enclosure (4) is filled with an inert gas.

8. Motor vehicle (8), comprising:
- an electric motor (9);
- a battery according to any one of the preceding claims powering the electric motor, the thermal time constant of the battery being at least two times greater than the autonomy of the vehicle driven by the electric motor.

9. Motor vehicle (8) according to Claim 8, comprising:
- a battery according to any one of Claims 1 to 4;
- a measurement probe (11) for measuring the temperature inside the adiabatic enclosure;
- a measurement probe (12) for measuring the temperature outside the battery;
- a control module (7) establishing the flow of heat transfer fluid between said external volume and the adiabatic enclosure when:
- the outside temperature is higher than the temperature in the adiabatic enclosure and the temperature in the adiabatic enclosure is below a low threshold; or
- the outside temperature is lower than the temperature in the adiabatic enclosure and the temperature in the adiabatic enclosure is higher than a high threshold.

10. Motor vehicle according to Claim 9, in which the control module is suitable for determining the absence of powering of the motor by the battery, the control module conditioning the establishment of the flow of heat transfer fluid upon the determination of the absence of powering of the motor by the battery.

11. Motor vehicle according to Claims 9 and 10, in which the battery comprises a circuit for equalizing the charges of the accumulators housed in the adiabatic enclosure (4) and provided with at least one discharge resistor, the control module being suitable for controlling a discharging of the accumulators into said discharge resistor when the temperature inside the adiabatic enclosure (4) is below the low threshold and an absence of powering of the motor has been determined.
